# EUROPÄISCHE PATENTANMELDUNG

(11) **EP 2 289 687 A1**
(43) Veröffentlichungstag der Anmeldung: **02.03.2011**
(21) Anmeldenummer: 10006066.4
(22) Anmeldetag: 07.12.2007
(51) Int. Cl.: B29C 47/42, B29C 47/38, B29C 47/64, B29C 47/76, B29C 47/60, B29B 7/48, A23G 3/02

(54) **Verfahren zur Verarbeitung von zu entgasenden Produkten**

(30) Priorität: 16.05.2007 DE 102007023426; 18.06.2007 DE 102007028502; 03.12.2007 DE 102007058346
(62) Teilanmeldung aus: 07023739.1
(71) Anmelder: Entex Rust & Mitschke GmbH, 44805 Bochum (DE)
(72) Erfinder: Rust, Harald, 44805 Bochum (DE); Albak, Ilmi, 13158 Berlin (DE)
(74) Vertreter: Kaewert, Klaus

(57) **Zusammenfassung**

Nach der Erfindung werden Planetwalzenextruder, inbesondere zur Entgasung, auch zur Trocknung, mit Planetwalzenspindeln (21,22,23,60) versehen, die ganz oder teilweise einen reduzierten Zahnbesatz aufweisen.

## Beschreibung

Die Erfindung betrifft ein Verfahren zur Verarbeitung von PET oder anderen zu entgasenden Produkten.

Die weltweite Bedeutung von PET (Polyethylenenterephthalat) ist bereits mit verschiedenen Aufsätzen gewürdigt worden. Zum Beispiel wird verwiesen auf den Aufsatz von Schwarz, Wiederverarbeitung von PET durch reaktive Extrusion, http://www.petnology.com/deutsch/zine/material/beitrage/schwarz ikv/schwarz ikv.html. Dort finden sich auch weitere druckschriftliche Nachweise.

Dabei ist auf die Bedeutung für die Verpackung, insbesondere für Getränke, hingewiesen. Entsprechend dieser Bedeutung besteht ein Bedarf nach PET. Darüber hinaus ist mit einer entsprechenden Abfallmenge zu rechnen.

Bei der Abfallwirtschaft ist bei PET eine vorteilhafte Situation gegeben. PET fällt in großem Umfang sortenrein an.

Zum Recycling von PET stehen verschiedene Verfahren zur Verfügung.

Ein Verfahren ist eine rohstoffliches Recycling.

Ein anderes Verfahren ist ein werkstoffliches Recycling. Das werkstoffliche Recycling umfaßt Zerkleinerung, Reinigung und Trocknung des Altmaterials mit anschließender Regranulierung. Die Reinigung ist problematisch. Solange keine 100%ige Reinigung erfolgt, sind die Einsatzmöglichkeiten des Altmaterials eingeschränkt.

Sowohl bei neuem Material als auch bei Altmaterial stellt sich das Problem, daß PET ein Polykondensat ist. Die Monomere werden durch Abspaltung von Wasser verknüpft, so daß Polymere entstehen. Dieser Vorgang ist reversibel. Durch die Einwirkung von Wasser kann PET, vor allem bei hohen Temperaturen, in seine Bestandteile zerfallen.

PET nimmt bei der Lagerung an der Umgebungsluft bis zu 0,5Gew% Wasser auf. Das Wasser gefährdet die Produktqualität. Deshalb ist üblicherweise vor der Verarbeitung eine Trocknung von PET vorgesehen.

Es ist aber auch bekannt, PET ohne eine vorherige Trocknung in einen DoppelschneckenExtruder zu geben und das Wasser in Form eine Entgasung aus der PET-Schrnelze abzuziehen. Dabei können auch zwei Entgasungszonen vorgesehen sein.

Das bekannte Verfahren ist jedoch sehr kompliziert, so daß es außerordentlich schwierig ist, eine kommerziell verwendbare PET-Qualität zu erzeugen. Deshalb hat sich das Verfahren bisher nicht durchsetzen können.

Das Entgasungsproblem kommt nicht nur bei PET, sondern auch bei diversen anderen Stoffen vor. Dabei beschränkt sich die Entgasung nicht auf Wasseranteile. Auch bei anderen gasförmigen Bestandteilen kann eine Entgasung geboten sein. Die gasförmigen Bestandteile können Fremdstoffe sein. Die Stoffe können zum Beispiel durch chemische oder physikalische Reaktion einen gasförmigen Zustand einnehmen.

Nach dem älteren Vorschlag sollen die Qualitätsprobleme dadurch gelöst werden, daß
a) die Entgasung unter Kneten des Einsatzmaterinles unterhalb des Glaspunktes des PET, vorzugsweise mindestens 10 Grad Celsius unterhalb des Glaspunktes des PET, noch weitere bevorzugt mindestens 15 Grad Celsius unterhalb des Glaspunktes von PET, und
b) in trockener Atmosphäre erfolgt.

Das Einsatzmaterial hat vorzugsweise eine Granulatform. Das Einsatzmaterial kommt auch in Flakes, Schnitzeln, Platten, Filamenten und Agglomeraten vor. Im weiteren ist nur die Granulatform angesprochen. Das schließt alle anderen Formen des Einsatzmateriales, auch Mischungen verschiedener Formen ein. Die Mischungen der Formen können sowohl bei frischem(neu hergestelltem) PET als auch bei recyceltem PET als auch dann vorkommen, wenn recyceltes PET mit einem Zusatz an frischem PET eingesetzt wird oder umgekehrt.

Das Kneten findet ohne Aufschmelzen von PET statt.

Durch das Kneten findet ein Materialaustausch an der Oberfläche der Granulate statt. Dabei kann die an die Oberfläche kommende Feuchtigkeit abdampfen. Das Abdampfen wird durch Erwärmung des Granulats gesteigert.

Jede Erwärmung steigert schon das Abdampfen beim Kneten. So kann die Erwärmung auf mindestens 50 oder auf mindestens 70 Grad Celsius erfolgen. Günstiger ist eine höhere Erwärmung auf mindestens 90 Grad Celsius, noch besser eine Erwärmung auf mindestens 110 Grad Celsius, vorzugsweise erfolgt die Erwärmung auf 130 Grad Celsius plus/minus 5 Grad Celsius.

In weiterer Ausbildung des älteren Vorschlages wird zum Kneten ein Extruder eingesetzt.

Vorzugsweise findet dabei ein Planetwalzenextruder, zumindest ein Planetwalzenextruderabschnitt, Anwendung. Von Planetwalzenextruderabschnitten/Modulen wird dann gesprochen, wenn ein Extruder sich aus mehreren Abschnitten/Modulen zusammensetzt. Zumeist handelt es sich um unterschiedliche Abschnitte/Module.

Ein Planetwalzenextruder besitzt eine Zentralspindel, ein innen verzahntes Gehäuse und zwischen Gehäuseinnenverzahnung und der Zentralspindel verschiedene Planetspindeln. Die Planetspindeln kämmen sowohl mit der Zentralspindel als auch mit dem innen verzahnten Extrudergehäuse. Die Planetspindeln laufen dabei um die Zentralspindel um.

Wegen der Einzelheiten und Variationen bekannter Planetwalzenextruder bzw. Abschnitten/Modulen wird Bezug genommen auf folgende Druckschriften:
DE 102005007952A1, DE102004061068A1, DE102004038875A1, DE102004048794Al,
DE102004048773A1, DE102004048440A1, DE102004046228A1, DE102004044086A1,
DE102004044085A1, DE102004038774A1, DE102004034039A1, DE102004032694A1,
DE142004026799B4, DE102004023085A1, DE102004004230A1, DE102004002159A1,
DE19962886A1, DE19962883A1, DE19962859A1, DE19960494A1, DE19958398A1,
DE19956803A1, DE19956802A1, DE19953796A1, DE19953793A1.

Um das Kneten ohne Aufschmelzen zu bewirken, wird der Planetwalzenextruderabschnitt nach der Erfindung so eingestellt, daß sich die Materialverformung auf das Kneten ohne Aufschmelzung beschränkt.

Für die Einstellung des Knetens können an dem Planetwalzenextruder verändert werden:
a) das Spiel zwischen den bewegten Planetwalzenteilen
b) die Anzahl der Planetspindeln
c) die Verzahnung der Planetwalzenteile

### Zu a)

Mit dem Spiel zwischen den bewegten Planetwalzenteilen wird das Maß der Verformung bestimmt, dem das Granulat unterliegt, wenn es zwischen die Zähne der Planetwalzenteile gelangt. Je kleiner das Spiel ist, desto stärker wird die Verformung. Je größer das Spiel ist, desto geringer wird die Verformung.

*Das Spiel ist naturgemäß abhängig von der Zahngröße, der durch den Zahnmodul bestimmt wird Bei kleiner Zahngröße kann auch das mögliche Spiel in mm nur klein sein; bei großer Zahngröße kann das mögliche Spiel in mm entsprechend groß sein.*

### Zu b)

Das Besondere an Planetwalzenextrudern bzw. an Planetwalzenextruderabschnitten gegenüber Extrudern und Extruderabschnitten anderer Bauart, ist neben einer extremen Verformungsleistung ein Hohlraum zwischen den die Zentralspindel umlaufenden Planetspindeln. In den Hohlraum kann das Granulat strömen.

Der Hohlraum wird durch Änderung der Anzahl der Planetspindeln beeinflußt. Je geringer die Zahl der Planetspindeln ist, desto größer wird der Hohlraum.

*Die mögliche Zahl der Planetspindeln hängt von den Dur chmesserverhältnissen der Zentralspindel und der Planetspindeln sowie von dem gewählten Zahnmodul ab.*

### Zu c)

Die Verzahnung kann unterschiedliche Beschaffenheit haben.

Wahlweise ist eine Noppenverzahnung vorgesehen. Die Noppenverzahnung entsteht vorzugsweise aus der Normalverzahnung.

Die Normalverzahnung von Planetspindeln ist einerseits durch einen Querschnitt gekennzeichnet, wie ihn die ineinander greifenden Zähne der Zahnräder eines Getriebes zeigen. Anderseits verlaufen die Zähne nicht gerade sondern spindelförmig bzw. wie die Gewindegänge eines Schraubgewindes am Umfang entlang.

Die Gewindegänge werden auch in dieser Form in das Ausgangsmaterial der Planetspindeln geschnitten, z.B. gedreht oder gefräst.

Bei den Gewinden wird unterschieden zwischen linksgängem Gewinde und rechtsgängigem Gewinde. Es gibt auch mehrgängige Gewinde.

Die gleiche Unterscheidung findet an Extruderspindeln statt.

Eine Noppenverzahnung entsteht, wenn z.B. in eine rechtsgängige Verzahnung eine linksgängig verlaufende Nut ähnlich einem Gewindegang eingearbeitet wird. Durch die Nut werden die Gewindegänge der Planetspindeln unterbrochen. Die Nut kann gleiche oder eine andere (geringer oder größere) Steigung als die Verzahnung der Spindeln besitzen. Die Steigung der Nut weicht vorzugsweise höchstens um 50% von der Steigung der Verzahnung ab.

Die Noppenverzahnung kann auf einzelne Planetwalzenteile beschränkt sein. Die Noppenverzahnung kann auch in mehreren oder in allen Planetwalzenteilen vorgesehen sein. Die Noppenverzahnung kann ganz oder teilweise die Verzahnung an den Planetwalzenteilen bilden.

Bei teilweise Noppenverzahnung an den Planetwalzenteilen kann es gewünscht sein, den normalverzahnten Teil der Planetwalzenteile in Förderrichtung des Extruders am hinter Ende (am austragseitigen Ende der Planetwalzenteile) anzuordnen, um dort einen Förderdruck aufzubauen, der einen Übergang des Granulates in den weiteren Extruderbereich sicherzustellen, der die Aufschmelzung des Granulates bewirkt.

Wahlweise können sich auch Noppenverzahnte Planetwalzenspindeln mit normal verzahnten Planetwalzenspindeln abwechseln und umgekehrt.

Wahlweise können auch einzelne norrnalverzahnte Planetwalzenspindeln zwischen Noppenverzahnten Planetwalzenspindeln angeordnet sein oder umgekehrt.

Sofern die Noppenverzahnung in mehreren korrespondierenden Planetwalzenteilen vorgesehen ist, kann die Noppenverzahnung so angeordnet werden, daß die Unterbrechungen der Verzahnung im einen Planetwalzenteil mit den Unterbrechnungen im korrespondierenden Planetwalzenteil fluchten oder im Verhältnis zu diesen Unterbrechungen versetzt sind. Der Versatz kann ein Maß haben, das gleich einem Bruchteil der Zahnlücke zwischen zwei Zähnen oder ein Mehrfaches der Zahnlücke zwischen zwei Zähnen ist, wobei ein Mehrfaches auch eine Zahl kleiner 2 sein kann.

Durch die Unterbrechung der Zähne entstehen Öffnungen, in welche das Granulat strömen kann.

Das unter b) beschriebene Hohlrawnvolumen und die unter c) beschriebene Noppenverzahnung reduzieren den von den Planetwalzenteilen ausgehenden Druckaufbau, so daß das Granulat für eine notwendige Entgasungsdauer in dem Extruder bzw. in dem Extruderabschnitt verbleiben kann.

Vorzugsweise besitzt der Planetwalzenabschnitt eine Länge von höchstens 1200 mm bei einem Durchmesser bis 100 mm in der Verzahnung des Planetwalten-Extrudergehäuses, noch weiter bevorzugt von höchstens 1000 mm. Bei anderen Durchmessern der Verzahnung des Planetwalzen-Extrudergehäuses ergeben sich entsprechend größere oder kleinere maximale Längen.

Beim Kneten wird im Extruder bzw. im Extruderabschnitt in erheblichem Umfang Energie freigesetzt, die sich in dem Granulat als Wärme zeigt. Sofern das Granulat schon mit erheblicher Temperatur in den Planetwalzenextruder bzw. den Planetwalzenextruderabschnitt gelangt, kann es erforderlich werden, die anfallende Wärme durch Kühlung abzuführen. Sofern das Granulat beim Eintritt in den Planetwalzenextruder bzw. den Extruderabschnitt noch keine ausreichende Temperatur hat, unterbleibt obige Kühlung. Gegebenenfalls wird sogar Wärme zugeführt.

Für die Kühlung und/oder Erwärmung sind übliche Temperiemngseirnichtungen an Planetwalzenextrudern ausreichend. Üblich ist es, das Gehäuse zweischalig auszuführen und das Temperierungsmittel durch den Zwischenraum zu leiten. Üblich ist auch, die Zentralspindel mit Kanälen zu versehen, durch die gleichfalls Temperierungsmittel geleitet wird. Das übliche Temperierungsmittel ist Wasser oder Öl, mit dem beheizt oder gekühlt wird.

Um dem Granulat eine möglichst günstige Ausgangstemperatur für den Entgasungsvorgang zu geben, wird das Granulat im Extrudereinzug und/oder in einer vorgeschalteten Heizeinrichtung vorgewärmt, bevor es dem Abdampfvorgang und Entgasungsvorgang zugeführt wird.

Vorzugsweise findet das Abdampfen und Entgasen in einem Extruder mit einem Planetwalzenextruderabschnitt und einer vorgeschalteten Einzugschnecke(Füllteil) statt, die zur Vorwärmung des PET beheizt ist, so daß die Temperierung im Planetwalzenextruderabschnitt sich auf die Kühlung beschränken kann. Vorzugsweise ist die Einzugsschnecke eine Einschnecke.

Über der Einzugschnecke kann in üblicher Weise eine Dosierung mit einem Trichter, ggfs. auch mit einer Dosierschnecke angeordnet sein. Günstig ist, wenn die Dosierung gleichfalls beheizt ist, um die Vorwärmstrecke zu verlängern.

Der bei der Entgasung im Planetwalzenextruderabschnitt anfallende Dampf kann dort abgezogen werden. Dafür können bekannte Entgasungseinrichtungen an Planetwalzenextruderabschnitten genutzt werden.

Vorzugsweise findet jedoch eine Gasabzug durch die Einzugschnecke hindurch statt. Dazu wird im Einzugsbereich ein Unterdruck (Saugzug) angelegt und wird durch eine bestimmte Dosierung des Granulates sichergestellt, daß der Dampf entlang der Einzugschnecke entweichen kann.

Dabei wird die Einzugschnecke unterfüttert. Die Dosierung wird so gestaltet, daß das eingezogene Granulat höchstens locker in den Gängen der Einzugschnecke liegt. Vorzugsweise werden der Querschnitt der Einzugschnecke über der gesamten Länge nur teilweise ausgefüllt. Dazu ist wahlweise auch durch eine entsprechend große Querschnittsgestaltung bei den Schneckengängen vorgesehen. Die Dimensionsierung der Schneckengänge läßt sich dabei einerseits mit wenigen Versuchen anderseits auch durch Berechnung bestimmen. Maßgebend für die Berechnung sind der vorgesehene Materialdurchsatz und Material.

Das richtige Maß an Knetung und an Unterdruck läßt sich unter Beobachtung der aus dem Extruder austretenden Schmelze leicht kontrollieren. Wenn die Qualität nachläßt, stellen sich in der austretenden Schmelze Blasen bzw. Trübungen ein, während ungefärbtes PET bei richtiger Entgasung klar durchsichtig ist. Die Blasen und Trübungen lassen sich im Regelfall durch Verstärkung des Knetens und/oder durch Verstärkung des Unterdruckes für die Entgasung beseitigen.

Die Anlegung des Unterdruckes erfolgt in einem gekapselten Einzug und ggfs. in einer gekapselten Dosienmg.

Die Kapselung kann unter Verwendung eines oder mehrerer Schleusen erfolgen, die von dem Granulat durchwandert werden. Jede Schleuse besteht wahlweise aus einem Behälter und zwei Schließeinrichtungen, die in Durchströmungsrichtung des Behälters vor und hinter dem Behälter angeordnet sind. Es ist im Betrieb einer Schleuse immer mindestens eine der Schließeinrichtungen geschlossen. Beim Schleusenbetrieb ist zu unterscheiden zwischen der Behälterfüllung, der Erzeugung des Unterdrucks im Behälter und der Bebälterentleerung. Bei der Behälterfüllung ist der Behälterausgang geschlossen. Vorzugsweise sind bei Gasabsaugung zur Unterdruckerzeugung der Behältemusgang und der Behältereingang geschlossen. Bei der Behälterentleerung bleibt der Behältereingang geschlossen, während der Behälterausgang geöffnet wird.

Mit nur einer solchen Schleuse entsteht eine diskontinuierliche Dosierung, weil die Dosierung der Schnecke zur Behälterfüllung unterbrochen werden muß.

Mit zwei solchen Schleusen, kann eine kontinuierliche Dosierung erfolgen.

Dabei können die Schleusen parallel geschaltet sein, so daß mit der Entleerung der einen Schleuse auf die andere Schleuse umgeschaltet werden kann.

Dabei können die Schleusen auch hintereinander geschaltet sein. Bei der Hintereinanderschaltung durchläuft das Granulat erst den Behälter in der ersten Schleuse und dann den Behälter in der zweiten Schleuse. Dadurch gibt es auf dem Förderweg des Granulats einen Behälter, welcher dem Extruder am nächsten ist und einen Behälter, welcher einen größer Abstand hat und in Förderrichtung vor dem ersten Behälter angeordnet ist. Bei diesem Konzept wird der Behälter in der zweiten Schleuse aus dem Behälter der ersten Schleuse immer wieder nachgefüllt bevor eine Entleerung stattgefunden hat. Die Öffnung des ersten Behälters erfolgt zum Nachfüllen, wenn der zweite Behälter auf den gleichen Druck wie der erste Behälter gebracht worden ist.

Die Behälter beider Schleusen besitzen vorzugsweise eine Steuerung mit mindestens einem Min-Schalter, der bei Erreichen einer Mindestfüllung Kontakt gibt, und einem Max-Schalter, der bei Erreichen einer maximalen Füllung Kontakt gibt. Der Kontakt bei Erreichen der Mindestfüllung dient der Nachfüllung. Der Kontakt bei Erreichen der maximalen Füllung dient beim Nachfüllen der Beendigung des Füllvorgangs.

Vorteilhafterweise wird das Nachfüllen vereinfacht, wenn austragseitig an den Schleusen besondere Austrageinrichtungen vorgesehen sind, wie zum Beispiel Zellenräder. Die Zellenräder bilden ihrerseits eine Schleuse und zugleich eine Dosierung.

Günstig ist auch eine Beheizung der Schleusen. Das erleichtert die Trocknung und ermöglicht eine Vorentgasung.

Es kommen auch Schleusen in Betracht, die durch eine Schnecke gebildet werden. Diese Schnecke wird nachfolgend Schleusenschnecke genannt.

Die Schleusenschnecke kann ein Seitenextruder sein. Diese Schleusen-Schnecke kann auch eine spezielle Füllschnecke oder Stopfschnecke sein. Nach dem älteren Vorschlag wird die Schleusen-Schnecke so mit Granulat gefüttert, daß das Granulat eine ausreichende Dichtwirkung entfaltet, um den oben erläuterten Unterdruck mit wirtschaftlichem Aufwand zu bewirken.

Bei ausreichender Schneckenlänge ist die an der Schleusenschnecke zu berücksichtigende Leckage vernachlässigbar. Dabei ist eine Lackage vernachlässigbar, deren Ausgleich im Verhältnis zum Absaugen des Abdampfes aus der Entgasungsstation bis zu 10% der Pumpenleistung für das Absaugen erfordert. Selbst eine Verdoppelung der Pumpenleistung zum Ausgleich einer Leckage an der Schleusenschnecke kann noch wirtschaftlich tragbar sein.

Mit einer Schleusenschnecke ist gleichfalls ein kontinuierlicher Materialeintrag in den oben beschriebenen Extruder möglich.

Wahlweise bilden die Schnecken auch nur einen Austrag am Behälter einer Schleuse. Mit der Schnecke kann vorteilhafterweise über den Materialaustrag hinaus eine Auflockerung der Behälterfüllung bewirkt werden.

Während eine Schleusenschnecke durch entsprechende Fütterung zumindest eine weitgehende Abdichtung des Extrudereintrages bewirkt, hat eine Unterfütterung einen Gasdurchlaß zur Folge. Die Unterfütterung kommt an der Eintragschnecke des Extruder zur Anwendung. Ziel ist dabei eine Absaugung des Planetwalzenextruderteiles entlang der Einzugschnecke bzw. durch deren Schneckengänge hindurch. Damit ist eine separate Absaugung an dem Planetwalzenextruderabschnitt entbehrlich.

Wahlweise erfolgt die Absaugung zusätzlich oder alternativ über eine unmittelbar an den Planetwalzenabschnitt angeschlossene Leitung. Die Leitung zu einer separaten Pumpe führen. Die Leitung kann auch zu einer gemeinsamen Pumpe führen. Diese gemeinsame Pumpe saugt dann sowohl den gekapselten Extrudereintrag und ggfs. die Dosierung als auch den zur Entgasung vorgesehenen Planetwalzenextruderabschnitt ab. Dabei können Schieber in den Leitungen sicherstellen, daß die Absaugeleistung sich in gewünschter Weise auf die verschiedenen abzusaugenden Bereiche verteilt.

Wahlweise sind noch weitere Pumpen vorgesehen. Zum Beispiel können am Materialeinzug ein Leitungsanschluß und in Förderrichtung vor den Schleusen ein Leitungsanschluß vorgesehen sein, deren Leitungen zu separaten Pumpen führen.

Günstig ist, wenn in Absaugrichtung vor den Pumpen ein Kondensator in der Saugleitung angeordnet ist.

Vorteilhafte Ergebnisse lassen sich auch erzielen, wenn die dem Extruder nächste Schleuse mit einem Schneckenaustrag versehen ist und das Material über ein Fallrohr in den Fallrohr aufgegeben wird.

Vorzugsweise ist auch am Fallrohr eine Gasabsaugung zur weiteren Entgasung oder zur Aufrechterhaltung des bisherigen Unterdruckes vorgesehen.

Günslig ist auch eine Beheizung des Fallrohres zur Verlängerung der Beheizungsstrecke für die Vorwärmung und gegebenenfalls für die Vorentgasung des Materials.

In Extruderrichtung sind hinter der Entgasung ein oder mehrere Extruderabschnitte vorgesehen, die ein Aufschmelzen des entgasten Granulats bewirken.

Für die verschiedenen Extruderabschnitte ist eine gemeinsame Spindel vorgesehen. Die gemeinsame Spindel wird durch eine Stange/Rohr gebildet, das sich vom Extruderantrieb bis zum Extruderende erstreckt. Auf die Stange/Rohr werden für Aufsätze geschoben, die an gewünschter Stelle die Einzugschnecke und an anderer gewünschter Stelle die Zentralspindel des Planetwalzenextruderabschnittes und an weiterer gewünschter Stelle die Schnecke zum Aufschmelzen des Granulats bilden. Auf der Stange/Rohr werden die verschiedenen Aufsätze verspannt.

Dabei findet je nach Beschaffenheit des PET eine Temperatursteigerung im PET auf bis zu 260 Grad Celsius statt. Für diese Aufschmelzung kann ein Extruderabschnitt mit einer herkömmlichen Einschnecke verwendet werden.

Die aus dem Extruder austretende PET-SchmelZe kann unterschiedlichen Verwendungen zugeführt werden, z.B. der Verwendung für eine Folie oder für Behältnisse wie Flaschen.

Für die Herstellung von Flaschen aus extrudierter Schmelze stehen verschiedene Verfahren zur Verfügung. Beispielsweise kann die Schmelze zur Herstellung von Flaschen in eine Form gedrückt oder gespritzt werden. Die bekannten Verfahren zur Flaschenherstellung führen zu einem intermittierenden Bedarf an PET-Schmelze. Deshalb kann es zweckmäßig sein, über den Extruder kontinuierlich in einen Schmelzespeicher zu fahren, der die Schmelze in den notwendigen Abständen in eine Form drückt.

Zur Folienherstellung dienen in der Regel Kalander und Glättwerke. Das PET muß mit ausreichender Temperatur zwischen die Kalanderwalzen gefahren werden. Dazu sind verschiedene Verfahren bekannt. Zum Beispiel kann mit einer Breitschlitzdüse gearbeitet werden. Den notwendigen Druckaufbau für die Breitschlitzdüse kann der Extruder leisten. Der Druck kann auch mit einer zwischengeschalteten Schmelzepumpe hochgespannt werden.

Der ältere Vorschlag nach der EP6014516 hat sich die Aufgabe gestellt, die Wirkung von Mischung und Transport der Schmelze im Planetwalzenextruder zu steuern.

Nach dem älteren Vorschlag nach der EP6014516 wird das dadurch erreicht, daß die Planetwalzenspindeln den unterschiedlichen Anforderungen angepasst sind.

Bei Einschneckenextrudern ist das Leistuagsverhalten einer Schnecke verhältnismäßig leicht einstellbar. Das resultiert aus der dort üblichen Bauweise:

Jede zeitgemäße Schnecke setzt sich aus einzelnen Abschnitten zusammen, die mittig eine Bohrung besitzen. Durch die Bohrung erstreckt sich ein Anker, mit dem die einzelnen Abschnitte gegeneinander verspannt werden. Je nach Bedarf haben die einzelnen Abschnitte eine andere Konfiguration. Das äußert sich zum Beispiel in verschiedenen Steigungen.

Bei Doppelschneckenextrudern findet die Bauweise nur eingeschränkt Anwendung, denn die beiden Schnecken des Doppelschneckenextruders kämmen miteinander und müssen deshalb im Wesentlichen baugleich sein.

Bei den Planetwalzenextrudern ist die bei den Einschnecken und Doppelschnecken bekannte Bauweise nicht üblich. Das hat den einfachen Grund, daß die notwendige Anpassung aller verzahnten Teile spätestens bei dem innen verzahnten Gehäuse des Extruders bzw. bei dessen innen verzahnter Buchse endet Bei den Planetwalzenextrudern sind Änderungen an den Planetwalaenspindeln bekannt Zu den bekannten Änderungen der Planetwalzenspindeln gehört die oben beschriebene Noppenbildung. Die Noppenverzahnung verringert die Vortriebswirkung auf die Schmelze, so daß sich die Mischleistung erhöht. Darüber hinaus ist es bekannt, die Planetwalzenspindeln mit umlaufenden Nuten zu versehen. Die umlaufenden Nuten reduzieren die Förderwirkung auf die Schmelze auf Null.

Der ältere Vorschlag nach der EP6014516 hat eine weitere Möglichkeit zur Einflussnahme auf die Förderwirkung der Planetwalzenspindeln (auch Planetspindeln genannt) gefunden. Nach den älteren Vorschlag nach der EP6014516 wird an mindestens einer Planetenspindel mindestens ein Zahn entfernt, *nachfolgend auch erfindungsgemäße Zahnreduzierung genannt. Vorteilhafterweise eröffnet der ältere Vorschlag mit der erfindungsgemäßen Zahnreduzierung neue und weitgehende Einflussmöglichkeiten auf das Behandlungsgut*/*Extrusionsgut im Extruder. Dies läßt sich nicht noch genug einschätzen, weil dabei die Erfindung in vorhandenen Systemen bleiben kann. Die Erfindung kann auf bekanntem Extruderdesign von Planetwalzenextrudern aufbauen, so daß sich die Möglichkeit einer sparsamen Änderung vorhandener Planetwalzenextruder durch Auswechselung der Planetspindeln eröffnet.*

*Die Erfindung hat sich die Aufgabe gestellt, die Lösung nach der* EP6014516 *weiterzuentwickeln. Das wird mit den Merkmalen der Patentansprüche, insbesondere durch weitere Reduzierung der Zähne an den Planetwalzenspindeln erreicht..* Es verbleibt mindestens 1 Zahn, vorzugsweise mindestens 2 Zähne und noch weiter bevorzugt mindestens jeweils 3 Zähne am Umfang der Planetwalzenspindeln. Bei drei gleichmäßig verteilten Zähnen ist noch nachvollziebar, daß die Planteenspindeln während des Umlaufs definierten Halt zwischen der Zentralspindel und dem innen verzahnten Gehäuse besitzen. Überraschender Weise zeigen auch Planetenspindeln mit nur zwei verbliebenen Zähnen eine ausreichende Lauftreue. Das gilt besonderes für einander diametral gegenüber liegende Zähne an den Planetspindeln.

Nicht mehr nachvollziehbar ist jedoch, daß Planetenspiadeln mit nur einem verbliebenen Zahn eine ausreichende Lauftreue besitzen. Das gilt besonders für eine Schrägverzahnung mit größerer Steigung. Als größere Steigung wird eine Steigung von mindestens 40 Grad, vorzugsweise eine Steigung von mindestens 45 Grad angesehen.

Vorzugsweise sind die verbleibenden Zähne auch gleichmäßig am Umfang verteilt. Es kann auch jeder vierte oder jeder dritte oder jeder zweite Zahn entfernt werden. Es handelt sich um reduzierten Zahnbesatz im Unterschied zu nicht reduziertem Zahnbesatz. Die Entfemung der Zähne erfolgt vorzugsweise bis in den Zahngrund. Denkbar ist auch eine darüber hinausgehende Materialausarbeitung, ebenso eine teilweise Entfernung der Zähne.

Durch die ganze oder teilweise Entfernung bestimmter Zähne entsteht bei unverändertem Fortbestand der übrigen Zähne eine Planetwalzenspindel mit mehr Förderwirkung als eine reine Noppenspindel, wenn auch mit weniger Mischleistung als eine reine Noppenspindel. Gegenüber einer üblichen Planetwalzenspindel ist die Förderwirkung aber geringer und die Mischleistung höher. Gleichwohl läßt sich z.B. die gleiche Förderwirkung des Extruder erreichen, indem nach der Reduzierung des Zahnbesatzes an den Planetenwalzenspindeln die Zahl der Planetenwalzenspindeln erhöht wird. Dadurch ergibt sich eine höhere Planetwalzenspindelzahl.

Die Erhöhung der Förderwirkung kann bei einer Temperaturerhöhung und damit verbundenem Viskositätsverlust wichtig, zum Teil sogar entscheidend werden. Das heißt, je höher die Schmelzetemperatur wird, desto flüssiger wird die Schmelze und desto schwieriger und wichtiger wird es, auf die Schmelze eine Förderwirkung auszuüben.

Ähnliche Situationen können sich bei der Trocknung von PET-Partikeln und vergleichbaren Stoffen ergeben. PET-Partikel zeigen auch temperaturabhängig schon unterschiedliche Reibungswerte. Das gilt besonders für den Grenzbereich, in dem die Partikel außen anschmelzen und innen noch fest sind. Eine zu geringe Förderwirkung kann zu lange Verweilzeiten des PET und eine zu große Sprödigkeit des PET zur Folgen haben.

Die Entfernung der Zähne kann an vorhandenen Planetwalzenspindeln nachträglich erfolgen. Soweit eine Vorratshaltung an Planetwalzenspindeln stattfindet und soweit eine Vergütung oder Härten oder sonstiges Behandeln zur Erhöhung der VerschleiBfestigkeit der Zahnflächen vorgesehen ist, werden die Planetwalzenspindeln vorzugsweise ohne die Oberflächenbebandlung bevorratet, damit im nachhinein eine einfache Bearbeitung der Planetwalzenspindeln, z.B. durch Fräsen, möglich ist. Die Behandlung der der Zänflächen erfolgt nach der Bearbeitung.

Überraschenderweise beeinträchtigt das erfindungsgemäße Entfernen von Zähnen die Laufruhe der Planetwalzenspindeln nicht, weil die Zähne wie Schrauben/Gewindegänge an der Oberfläche der Planetwalzenspindeln verlaufen. Bei ausreichender Länge der Spindeln und entsprechender Steigung umschlingen die schraubenförmig bzw. gewindegangförmig verlaufenden Zähne die Spindeln so häufig, daß die Planetwalzenspindeln zwischen der Zentralspindel und dem umgebenden Gehäuse sicher geführt und fixiert sind. Bei einer Planetwalzenspindel, bei der jeder zweite Zahn entfernt worden ist, ist nach dem älterem Vorschlag nach der EP6014516
a) bei einem Planetwalzenspindeldurchmesser kleiner 160 mm eine bearbeitete Spindellänge von mindestens 200 mm, bevorzugt von mindestens 300m und weiter bevorzugt eine Spindellänge von mindestens 400 mm und höchst bevorzugt eine Spindellänge bis 800 mm vorgesehen. Bei weniger entfernten Zähnen kann die Spindellänge kürzer sein, bei mehr entfernten Zähnen soll die Spindellänge länger sein.
b) bei einem Planetwalzenspindeldurchmesser von 160 mm und mehr eine bearbeitete Spindellänge von mindestens 400 mm, bevorzugt von mindestens 800m und weiter bevorzugt eine Spindellänge von mindestens 1200 mm und höchst bevorzugt eine Spindellänge bis 2500 mm vorgesehen. Bei weniger entfernten Zähnen kann die Spindellänge kürzer sein, bei mehr entfernten Zähnen soll die Spindellänge länger sein.

Die Bearbeitung der Planetwalzenspindeln kann auf alle bekannten Zahnmodule Anwendung finden, insbesondere auf die gebräuchlichen Module 1,5 bis 12 oder darüber hinaus bis 20. Die Zahnmodule sind von den oben erwähnten Planetwalzenteilen/Modulen zu unterscheiden.

Die Zahnmodule kennzeichnen die Größe der Zähne. Die Plaentwalzenabsehnitte/Extruderteile/Module werden mit den anderen Modulen zu dem jeweils gewünschten Extruder zusammengesetzt. Die Modulbauweise ist mit einem Baukastensystem vergleichbar und in der Regel besonders wirtschaftlich.

Die verschiedenen Planetenteile (Zentralspindel/Planetenspindeln/Innenverzahnung) eines Abschnittes/Moduls haben regelmäßig den gleichen Zahnmodul.

Wahlweise werden die Zähne nicht nachträglich entfernt, sondern findet eine Fertigung statt, bei der die Planetwalzenspindeln sofort in die Form gebracht werden, wie sie nach der oben beschriebenen Zahnentfemung entsteht.

Dazu ist zunächst darauf einzugehen, wie die Zähne bei herkömmlicher Verzahnung entstehen. Verbreitet ist die Herstellung durch Fräsen und Schleifen. Dazu wird die Kontur der Verzahnung festgelegt und der Fräser entlang der Kontur bewegt. Der Fräser arbeitet dabei verhältnismäßig grob. Deshalb ist anschließend eine Feinbearbeitung üblich, z.B. durch Schleifen bei außen verzahnten Teilen oder durch Honen oder Erodieren bei innen verzahnten Teilen üblich. Es sind auch umformende Herstellungsverfahren für Getriebeteile bekannt, das sind Gießen und Sintern. Zu den Umformenden Herstellungsverfahren zählt Schmieden, Pressen, Ziehen, Walzen, Stanzen).

Das Fräsen gehört zur spanenden Herstellung. Andere spanende Verfahren sind zum Beispiel Hobeln, Stoßen, Räumen, Schaben, Schleifen, Honen.

Allen Herstellungsverfahren für Verzahnungen ist gemeinsam, daß sie der festgelegten Kontur der Verzahnung folgen. Bei normaler Verzahnung wechselt ein Zahn mit einer Zahnlücke. Der Abstand zwischen zwei benachbarten Zähnen eines Teiles ist gleich

Bei der Festlegung der Kontur kommt es auf die Verzahnung an. Die Verzahnung folgt den allgemeinen Erkenntnissen der Getriebetechnik.

Man unterscheidet verschiedene Grundformen von Verzahnungen: Evolventenverzahnung, Zykloidenverzahnung und Treibstockverzahnung. Darüber hinaus gibt es diverse Sonderformen.

Bei Planetwalzenextrudern hat sich die Evolventenverzahnung durchgesetzt. Die Evolventenverzahnung mit vollem Zahnbesatz wird im folgenden als Normalverzahnung bezeichnet.

Bei der Evolventenverzahnungi werden die Flanken der Zähne des Zahnrades von Evolventen gebildet. Vorstellen kann man sich die Evolventen, wenn man sich den Zahnradgrundkreis als massiven Zylinder vorstellt, um den ein Faden gewickelt ist. Wird dieser Faden nun abgewickelt, so beschreibt der straff gespannte Endpunkt des Fadens die Figur eine Evolvente. Alle Punkte auf dem Faden, welche den ganzzahlig vielfachen Abstand vom Endpunkt aufweisen, bewegen sich somit auf der Evolvente eines anderen Zahnes. Die Evolventenverzahnungen haben folgende Vorteile:

Die Flanken zweier im Eingriffbefindlicher Zahnräder berühren sich immer, und in diesen Berührungspunkten haben sie stets die annähernd gleiche Geschwindigkeit. Somit ist gewährleistet, daß die Übertragung der Drehbewegung reibungsarm erfolgt.

Gleichzeitig erlaubt die Evolventenverzahnung die gleichmäßige Übertragung von Drehmomenten durch eine konstante Übersetzung.

Sie ist unempflindlich gegen das Verschieben der Achsen der Zahnräder (Achsabstandsunabhängigkeit).

Sie ist einfach in der Fertigung durch standardisierte geradlinige Werkzeuge.

Bei gleicher Geometrie des Werkzeuges sind Zahnräder mit unterschiedlicher Zähnezahl und unterschiedlicher Profilverschiebung frei miteinander kombinierbar.

Bei Planetwalzengetrieben ist man wie bei anderen Getrieben bemüht, mit möglichst geringem Spiel zwischen den Getriebeteilen zu arbeiten. Das Spiel kann bei der Festlegung der Kontur berücksichtigt werden. Bei Planetwalzenextrudern ist üblicherweise ein größeres Spiel vorgesehen. Auch dieses Spiel kann bei der Festlegung der Zahnkontur berücksichtigt werden.

Bei üblicher Verzahnung folgt ein Zahn einer Zahnlücke und einer Zahnlücke ein Zahn, wobei die Zähne und die Zahnlücken gleich sind. Da die Zähne in die Zahnlücken greifen und die miteinander kämmenden/ineinander greifenden Getriebeteile die gleiche Verzahnung haben sollen, beinhalten die Zahnlücken eine spiegelverkehrte Abbildung der Zähne.

Bei der erfindungsgemäßen Gestaltung der Verzahnung sind die Zahnlücken aber anders als bei üblicher Verzahnung. Bei der oben beschriebenen Herstellung der erfindungsgemäßen Verzahnung werden dazu an vorhandenen Getriebeteilen einzelne oder mehrere Zähne entfernt. Alternativ werden schon bei der Festlegung der Zahnkontur einzelne oder mehrere Zähne entfernt Die Herstellung folgt dann in der oben beschriebenen Weise der festgelegten erfindungsgemäßen Zahnkontur. Das heißt, im Falle der Anwendung eines Fräsers, folgt der Fräser der vorher festgelegten neuen Kontur mit größeren Zahnlücken. Entsprechendes gilt für andere Werkzeuge zur Herstellung der vorher festgelegten neuen Kontur.

Günstig ist es, wenn die Zahl der Zähne von Gehäuseumenverzahnung(Buchsenveizahnung), Planetspindeln und Zentralspindel so gewählt ist, daß der Selbstreinigungseffekt der Planetwalzenteile gewahrt bleibt. Das ist zum Beispiel dann der Fall, wenn die Zähnezahl an der Zentralspindel und an der Gehäuseinnenverzahnung(Buchsenverzahnung) gerade ist und die Zähnezahl an den Planetspindeln ungerade ist. Dann wird die Schmelze in jedem Zwischenraum zwischen zwei Zähnen durch die in den Zwischenraum eindringenden Zähne anderer Teile des Planetwalzenextruders in Bewegung gebracht.

Die gleichen Verhältnisse ergeben sich bei ungeraden Zähnezahlen an Zentralspindel und Gehäuseinnenverzahnung und gerade Zähnezahl an den Planetwalzenspindeln.

Das gleiche Ergebnis kann durch unregelmäßiges Entfernen des Zahnbesatzes erreicht werden, zum Beispiel dadurch, daß nicht regelmäßig jeder zweite Zahn, sondern einmal oder mehrmals ein anderer Zahn, zum Beispiel der dritte Zahn entfernt wird oder zum Beispiel zwei ursprünglich neben einander stehende Zähne unberührt bleiben. Das heißt, die Bearbeitung erfolgt in unterschiedlichen Abständen. Dabei kann ausreichend sein, daß ein Abstand anders als die anderen Abstände ist. Es können auch mehrer Abstände anders sein. Das gleiche Ergebnis kann auch dadurch erreicht werden, daß erfindungsgemäß bearbeitete Planetwalzenspindeln mit unbearbeiteten Planetwalzenspindeln kombiniert werden oder das unterschiedlich erfindungsgemäß bearbeitete Planetwalzenspindeln miteinander kombiniert werden.

Es besteht die Erwartung, daß sich Planetwalzenspindeln durchsetzen, die auf ihrer Länge ganz oder teilweise erfindungsgemäß verzahnt sind *und*/*oder mit einem in Förderrichtung des Extruders vorgeordneten und*/*oder nachgeordneten PlanetwalzenextruderabschnittlModul kombiniert, dessen Planetwalzenspindeln ganz oder teilweise anders verzahnt sind*

In der Anwendung auf PET und dergleichen Stoffe kann es gleichwohl vorteilhaft sein, Planetwalzenspindeln zu verwenden, die in dem oben beschriebenen Bereich die erfindungsgemäße Bearbeitung aufweisen und in dem übrigen Bereich normal verzahnt sind oder als Noppenspindeln ausgebildet sind oder eine andere Verzahnung aufweisen

Diese kann dadurch erfolgen, daß die Bearbeitungswerkzeuge am Übergang von dem einen Bereich in den anderen Bereich ausIaufen. In der Kombination mit Noppenbildung heißt das, die gegenläufige Verzahnung, welche in der oben beschriebenen Form die Noppenspindeln, läuft an dem erwähnten Übergang aus.

Desgleichen läuft die erfindungsgemäße Bearbeitung beim Übergang von einem Bereich in den anderen aus.

Wahlweise sind auch mehrteilige Planetwalzenspindeln vorgesehen, nämlich mit einem separat und erfindungsgemäß bearbeiteten Teil und mit einem separat hergestellten Restteil. Der Restteil kann ein Noppenverzahnungsteil oder ein normal verzahntes Teil oder ein anderes Teil sein. Beide Teile sind zugleich mit einer mittigen Bohrung für einen Anker versehen, mit dem die beiden Teile miteinander verspannt werden. Auf dem Wege entstehen mehrteilige Planetwalzenspindeln, die über ihrer Länge einen Verzahnungswechsel aufweisen, daß heißt von einer erfindungsgemäßen Verzahnung zu einer anderen Verzahnung wechseln.

Die Mehrteiligkeit kann bei der Herstellung der Verzahnung Vorteile haben, indem die Teile mit unterschiedlicher Verzahnung separat hergestellt werden. Dann müssen die Werkzeuge dem Zahnwechsel nicht folgen. Im Zusammenhang mit einem gewünschten schlagartigen Wechsel der Verzahnung bietet sich eine solche Vorgehensweise an.

Auf der anderen Seite kann verfahrenstechnisch auch ein langsamer Wechsel von einer Verzahnung zur anderen von Vorteil sein. Ein langsamer Übergang von einer erfindungsgemäßen Verzahnung zu einer Normalverzahnung entsteht in der Anwendung eines Fräsers zum Beispiel dadurch, daß der für die nachträgliche Zahnentfemung eingesetzte Fräser langsam aus dem Material der Planetwalzenspindel herausgefahren wird.

Es kann auch ein Wechsel von einer Verzahnung, zum Beispiel von einer Normalverzahnung, zu einer erfindungs gemäßen Verzahnung vorkommen. Dann gilt entsprechendes wie zu dem vorstehend erläuterten Wechsel mit der Maßgabe, daß für einen langsamen Wechsel der Fräser langsam in das Material der Planetwalzenspindel hineingefahren wird.

Die mehrteiligen Planetwalzenspindeln können auch einen mehrfachen Verzahnungswechsel besitzen.

Es kommen auch einteilige Planetwalzenspindeln in Betracht, die über Ihrer Länge in der Verzahnung einen oder mehrere Verzahnungswechsel zeigen.

Für jeden Wechsel der Verzahnung gelten die Ausführungen zur nachträglichen Entfernung von Zähnen und der vorhergehenden Festlegung der Zahnkontur entsprechend.

*Vorteilhafterweise können Planetenspindeln mit erfindungsgemäßem Zahnbesatz auch mit anderen Planetenspindeln kombiniert werden. Dabei kann die Zahl der erfindungsgemäßen Planetenspindeln größer oder kleiner als die Zahl der anderen Planetenspindeln sein. Zu den anderen Planetenspindeln können sowohl Planetenspindeln mit vollem herkömmlichem Zahnbesatz als auch die oben beschriebenen Noppenspindeln als auch andere Spindeln gehören.*

In der Anwendung auf PET lassen sich die Einsatzpartikel mit dem erfindungsgemäßen Planetwalzenextruder kontrolliert und sicher durch eine Trocknungszone fördern. Durch die erfindungsgemäße Verzahnung entsteht in dem Extruder ein größeres Kammervolumen als bei Normalverzahnung, so daß mehr Gelegenheit zur Trockung bzw. zur Entgasung besteht. Außerdem verringert sich durch die erfindungsgemäße Verzahnnung die Knetarbeit, so daß weniger Energie in das Behandlungsgut getragen wird und sofort ein Temperaturabfall gegenüber einer Trocknung in einem normal verzahnten Extruder entsteht.

Anstelle von PET lassen sich auch diverse andere *Stoffe, insbesondere* thermoplastische Kunststoffe mit dem erfindungsgemäßen Extruder bearbeiten. *Praktisch kann es sich um jede Art von extrudergängigen Stoffen handeln. Dabei entfalten die erftndungsgemäßen Spindeln überall dort Vorteile, wo es auf eine Mischung, auf Änderungen in der Viskosität, auf Änderungen in der Durchsatzgeschwindigkeit, auf eine Reaktion oder nur eine Zustandsänderung, auf die Temperaturführung, auf die mechanische Belastung des Einsatzgutes und des Extruders ankommt.*

*Andere können zum Beispiel Lebensmittel sein.*

*Andere Stoffe können auch die chemische und zugleich reaktive Schmelzen bzw. Flüssigkeiten sein*

*Andere Stoffe können auch Mischungen mit Verstärkungsfasern oder anderen Feststoffanteilen sein.*

Insbesondere läßt sich der erfindungsgemäße Extruder vorteilhaft in diversen Entgasungsvorgängen anwenden. Dazu wird zum Beispiel auf folgende Entgasungsvorgänge verwiesen:
DE102004061185A1, DE102004060966A1, DE102004053929A1, DE1020040050058A1, DE102004004237A1, DE69908565T2, DE69827497T2, DE69807708T2, DE69725985T2, DE69715781T2, DE6971508212, DE69711597T2, DE69710878T2, DE69709015T2, DE69707763T2, DE69630762T2, DE69628188T2, DE69622375T2, DE69428309T2, DE69427539T2, DE69419146T2, DE69312852T2, DE69312246T2, DE69306874T2, DE69207369T2, DE68928567T2, DE68915788T3, DE60206271T2, DE60012108T2, DE19956483A1, DE19954313A1, DEI0257377A1, DE10356821A1, DE10354546A1, DE10354379A1, DE10352444A1, DE10352440A1, DE10352439A1, DE10352432A1, DE10352431A1, DE10352430A1, DE10351463A1, DE10349144A1, DE10345043A1, DE10343964A1, DE10342822A1, DE10340977B4, DE10340976B4, DE10333927A1.

*Insbesondere läßt sich der erfindungsgemäße Extruder vorteilhaft als Verdampfer einsetzen, wenn sich durch teilweises Eindampfen eine wesentliche Änderung der Viskosität zeigt. Dann können mit größer werdender Zähigkeit des Behandlungsgutes Planetspindeln mit weniger Zähnen oder Planetspindeln einsetzen, deren Zähnezahl über der Länge der Planetspindeln der Veränderung der Viskiosität angepasst ist. Die Verwendung von anderen Planetspindein in einem in Förderrichtung nachgeordneten Planetwalzenextruderabschnitt läßt sich durch Auswechselung der Planetspindeln bewirken.*

*Die Veränderung der Zähnezahl an einer Planetenspindel erfolgt durch unterschiedliche Herausarbeitung*/*Entfernen der Zähne. Das geschieht zum Beispiel, indem der Fräsvorgang zum Entfernen von Zähnen an entsprechender Stelle abgebrochen wird.*

*Solche Vorgänge für eine geeignete Anwendung der Erfindung sind zum Beispiel beschrieben in der*
DE202006019922U1*,* DE102005018702A1*,* DE102004057349A1*,* DE10200403066A1*,* DE69935506T2*,* DE69807816T2*,* DE69702535T2*,* DE696709T2*,* DE69602176T2*,* DE69528460T2*,* DE69529584T2*,* DE695284640T2*,* DE69522852T2*,* DE69421586T2*,* DE68928567T2*,* DE68913303T2*,* DE60308224T2*,* DE60124829T2*,* DE60101735T2*,* DE19780093B4*,* DE19623528A1*,* DE19516563A1*,* DE10323527A1*,* DE10261289A1*,* DE112005000773T5*,* DE112004000332T5*,* DE102007007793A1*,* DE102005042393A1*,* DE102005018701A1*,* DE102004057349A1*,* DE102004057348A1*,* DE102004053836A1*,* DE102004032125A1*,* DE102004030664A1*,* DE102004030071A1*,* DE102004027070A1

*Beim Entgasen und Verdampfen ist in der Regel mit einer Änderung der Viskosität in Richtung einer größeren Zähigkeit zu rechnen.*

*Es gibt aber auch andere Vorgänge, bei denen in Förderrichtung des Extruders mit einer Änderung der Viskosität in Richtung einer Verringerung der Zähigkeit zu rechnen ist. Das ist zum Beispiel bei der Aufbereitung von Wachsen der Fall. Dann ist es von Vorteil, die erfindungsgemäßen mit verringerter Zähnzahl versehenen Planetenspindeln bzw. Planetspindelbereiche in Förderrichtung vor den Planetspindeln bzw. Planetspindelbereichen mit herkömmlicher Verzahnung bzw. mit höherer Zähnezahl zu verwenden.*

*Beim Mischen von Medien kann die Viskosität*/*Zähigkeit im Extruder je nach Beschaffenheit der Mischungkomponenten mit fortschreitender Einwirkung des Extruders zunehmen oder abnehmen Dann ist es je nach Erhöhung der Zähigkeit von Vorteil in Förderrichtung erfindungsgemäße Planetspindeln mit abnehmender*/*geringerer Zähnezahl einzusetzen. Je nach Verringerung der Zähigkeit ist es von Vorteil, die Planetspindeln mit abnehmender*/*geringer Zähnezahl in Förderrichtung vor einem Bereich höherer Zähnezahl einzusetzen Solche Vorgänge, für welche die Anwendung der erfindungsgemäßen Extruder von Vorteil ist, sind zum Beispiel beschrieben in:*
DE102005042541A1*,* DE6990181T2*,* DE6983612T2*,* DE69734332T2*,* DE69728466T2*,* DE696105T2*,* DE69317423T2*,* DE6902652T2*,* DE6902659T2*,* DE68918224T2*,* DE60305509T2*,* DE60101646T2*,* DE60024975T2*,* DE60018373T2*.*

*Mischvorgänge finden sich insbesondere im Bereich der Lebensmittelindustrie. Zum Beispiel sind solche Lebensmittelvorgänge, auf welche die Anwendung der erfindungsgemäßen Extruder von Vorteil ist, zum Beispiel beschrieben in:*
DE102006019562A1*,* DE102006011269A1*,* DE102005060945A1*,* DE699314300T2*,* DE69931188T2*,* DE69931169T2*,* DE69930013T2*,* DE69928698T2*,* DE69928572T2*,* DE69928447T2*,* DE69928388T2*,* DE69926917T2*,* DE69926395T2*,* DE69925658T2 *Extreme Mischvorgänge können sich beim Einmischen von Feststoffen ergeben. Wenn zum Beispiel Nüsse in eine Schokoladenmasse gemischt werden sollen, so würden die Nüsse zermahlen, wenn sie im Extruder keinen Durchtrittsraum finden. Dieser Durchtrittsraum wird mit den erfindungsgemäß zahnreduzierten Planeten geschaffen. In den durch erfindungsgemäßes Entfernen der zähne entstehenden Zwischenräumen können die Nüsse und dergleichen Feststoffe ohne weiteres als ganz Stücke weitertransportiert werden.*

*Extreme Situationen können sich ergeben, wenn in das Behandlungsgut Fasern eingemischt werden. Dann ergibt sich zwangsläufig eine zähflüssigere Mischung, für die eine schonende Behandlung von Vorteil ist, wie sie mit den erfindungsgemäß zahnreduzierten Planetspindeln erfolgt, wenn solche Planetspindeln der Zumischungssielle in Förderrichtung des Extruders nachgeordnet sind Solche Vorgänge, für welche die Anwendung der erfindungsgemäßen Extruder von Vorteil ist, sind zum Beispiel beschrieben in:*
DE102004017350A1*,* DE69916836T2*,* DE69808248T2*,* DE69712420T2*,* DE69305001 T2*,* DE19934693C2*,* DE10355073A1*,* DE10214654A1

*Vorteilhafterweise bewirken die erfindungsgemäß zahnreduzierten Planetspindeln noch eine schonende Behandlung der Fasern, so daß eingemischte Glasfasern viel weniger brechen als bei einer herkömmlichen Einmischung in einem Extruder. Je länger die Fasern bleiben, desto besser ist die von den Glasfasern ausgehende Verstärkungswirkung.*

*Ähnliche Situationen wie beim Mischen können sich bei einer chemischen Reaktion im Extruder ergeben. Die sich bildenden Reaktionsprodukte können eine höhere oder geringere Viskosität*/*Zähigkeit besitzen. Solche Vorgänge, für welche die Anwendung der erfindungsgemäßen Extruder von Vorteil ist, sind zum Beispiel beschrieben in:*
DE102007011838A1*,* 10200020984A1*,* DE102006015709A1*,* DE1020050544653A1*,* DE69931666T2*,* DE69931188T2*,* DE69930520T2*,* DE69930268T2*,* DE699013T2*,* DE69924122T2*,* DE 69923307T2*,* DE69922945T2*,* DE6992357T2*,* DE6990261T2*,* DE69902698T2*,* DE69901827T2*,* DE698323342T2*,* DE69829863T2*,* DE69801179T2

*Auch bei den chemischen Reaktionen kann die oben beschriebene schonende Wirkung des Behandlungsgutes von Vorteil sein. Das gilt besonders für die Polymerisationen. Dabei findet ein Kettenaufbau statt, der bei starker mechanischer Inanspruchnahme zumindest behindert, wenn nicht sogar verhindert wird*

*Das mit den erfindungsgemäß zahnreduzierten Planetspindeln behandelte Material ist geschäumt oder ungeschäumt. Bei der Schaumherstellung kommt es auf eine gute Mischung und eine gute Dispergierung und Homogenisierung des Treibmittels in der Schmelze an. Nach Beginn einer die Schaumqualität bestimmenden Zellbildung kann es von Vorteil sein, die beginnende Zellbildung nicht sofort wieder zu zerschlagen, sondern in einen schonenden Transport der Schmelze unter gleichzeitiger kontrollierter Temperaturführung überzugehen.*

*Ferner kann die Anwendung erfindungsgemäß zahnreduzierter Planetspindeln auch aus Gründen geringeren Energieeintrages und*/*oder aus Gründen schnelleren Schmelzetransportes von Vorteil sein. Nach ausreichender Durchmischung, Dispergierung und Homogenisierung des Treibmittels in der Schmelze sind ein unnötiger Energieeintrag und die damit verbundene Erwärmung von Nachteil, weil die Schmelzekühlung naturbedingte Grenzen hat. Bei übermäßiger Kühlung zum Abtransport unnötiger Wärme besteht die Gefahr, daß die Schmelze an dem Extrudergehäuse bzw. an der üblicherweise vorhandenen, innen verzahnten Gehäusebuchse einfriert und zu gravierenden Betriebsstörungen bis zur Beschädigung des Extruders führt.*

*So läßt sich die Anzahl der für die Friktionswärme maßgeblichen Zähne an den Planetspindeln ohne weiteres um mindestens 30% reduzieren oder um mindestens 50% oder sogar um mindestens 70% reduzieren. Mit bekannten Planetwalzenextrudern läßt sich die Anzahl der Planetspindeln in einem Planetwalzenextruderabschnitt in Grenzen verringern. Voraussetzung wäre jedoch, daß dies in einem in Förderrichtung nachgeordneten Abschnitt erfolgt. Dies bedingt, daß die Schmelze zunächst den Übergang von einem Abschnitt in den anderen und einen Anlaufring passiert, der zugleich eine Stauwirkung auf den Schmelzestrom ausübt. Abgesehen davon gehen die Möglichkeiten der erfindungsgemäß zahtrreduzierten Planetspindeln wesentlich weiter als die Möglichkeiten der Verringerung der Planetspindelzahl. Wenn die Möglichkeit der Verringerung der Planetspindelzahl weitgehend ausgeschöpft ist, kann die Friktion in der Schmelze durch Zahnreduzierung noch wesentlich weiter verringert werden.*

Die Planetwalzenspindeln bilden nur einen Teil des Planetwalzenextruders.

Andere Planetwalzenteile sind die Zentralspindel und die Innenverzahnung des Gehäuses bzw. der ggfs. im Gehäuse sitzenden Buchse.

Die Zentralspindel kann auch mit der erfindungsgemäßen Verzahnung versehen sein. Das gleiche gilt für die Innenverzahnung des Gehäuses bzw. der Buchse. Insoweit gelten obige Ausführungen auch für die Zentralspindel und die Innenverzahnung. Dabei gehören mehrteilige Zentralspindeln bereits zum bekannten Stand der Technik, so daß die erfindungsgemäße Bearbeitung der Zentralspindel leichter ist. Gleichwohl ist es in der Regel aus verfahrenstechnischen Gründen vorteilhafter, die Planetspindeln mit der erfindungsgemäBen Verzahnung zu versehen. Die Planetwalzenspindeln bieten bei entsprechend großer Besatzzahl eine größere Verzahnungsfläche als die Zentralspindel. Dadurch hat die erfindungsgemäße Verzahnung dort eine größere Wirkung als an der Zentralspindel. Hinzu kommt die vorteilhafte Kombinationsmöglichkeit der Planetwalzenspindeln. Wie oben ausgeführt, können erfindungsgemäß verzahnte Planetwalzenspindeln mit normal verzahnten Planetwalzenspindeln kombiniert werden. Dabei ist es leicht, die Zahl der normal verzahnten Planetwalzenspindeln oder die Zahl der erfindungsgemäß verzahnten Planetwalzenspindeln im Rahmen *der bestehenden Möglichkeiten* zu erhöhen, um eine genaue Anpassung an die gewünschte Materialbehandlung, insbesondere die Trocknung und Temperaturführung von PET zu erreichen.

*Die Zahl der Planetenspindeln ist naturgemäß durch den Hohlraum zwischen der Zentralspindel und dem Gehäuse begrenzt.*

Auch die Innenverzahnung des Gehäuses kann mit der erfindungsgemäßen Verzahnung versehen werden. Wie bei der Zentralspindel ist es in der Regel von Vorteil, die Planetwalzenspindeln mit der erfindungsgemäßen Verzahnung zu versehen.

Denkbar ist auch, alle Planetwalzenteile gemeinsam in erfindungsgemäßer Weise zu verzahnen.

Wahlweise kann die erfindtmgsgemäße Planetwalzenspindel auch mit herkömmlich verzahnten Planetwalzenspindeln oder anders verzahnten Planetwalzenspindeln kombiniert werden, solange deren Verzahnung mit der Zentralspindel und der Innenverzahnung des Gehäuses lauffähig ist. Lauffähig sind die Spindeln bei gleichem Zahnmodul und gleicher Verzahnungsart, zum Beispiel Evolventenverzahnung. Für die Evolventenverzahnung ist je nach Anwendungsfall des Extruders ein besonderer Zahnmodul zweckmäßig. Die Zahnmodul kann von 1 bis 25 gewählt werden.

Wahlweise können Planetwalzenspindeln mit erfindungsgemäßer Verzahnung teilweise auch eine andere Verzahnung aufweisen. Wegen der erhöhten Transportwirkung im Bereich erfindungsgemäßer Verzahnung kann dieser Bereich auch als Transport-Bereich bezeichnet werden. Dieser Bereich kann auch mit einem normal verzahnten Bereich oder einem gegenläufig verzahnten bezeichneten Bereich kombiniert werden. Der gegenläufig verzahnte Bereich führt zu einer zu einer igelartigen Verzahnung und kann deshalb auch als Igelverzahnung bezeichnet werden.

Die Normalverzahnung einer erfindungsgemäß verzahnten Planetenspindel befindet sich vorzugsweise an den Enden der Planetenspindel. Dort entwickelt die Normalverzahnung eine vorteilhafte Führungswirkung auf die Planetenspindel zwischen der Zentralspindel und dem innen verzahnten Gehäuse.

Die Länge der Normalverzahnung beträgt mindestens 1 D, vorzugsweise mindestens 1,5 D und noch weiter bevorzugt mindestens 2 D, wobei D das Maß des Teilkreisdurchmessers der Normalverzahnung ist.

Der Bereich der Igelverzahnung kann in Strömungsrichtung vor oder hinter dem Transport-Bereich vorgesehen.

An solchen kombinierten Spindeln ist die Länge des Transportbereiches vorzugsweis 30 bis 70% der Gesamtlänge der Planetenspindeln.

*Wahlweise können die erfindungsgemäß zahnreduzierten Planetspindeln auch durchgehend igelverzahnt oder noppenverzahnt werden. Das läßt sich zum Beispiel an igelverzuhnten oder noppenverzahnten Planetspindeln dadurch erreichen, daß die Zähne erfindungsgemäß ausgearbeitet werden*

Bei gegenläufiger Verzahnung wird zum Beispiel in die rechtsgängig verzahnten Planetspindeln zusätzlich eine linksgänge Verzahnung eingearbeitet.

In die linksgängig verzahnten Planetspindeln wird zur Erzeugung einer erfindungsgemäßen Verzahnung zusätzlich eine rechtsgängige Verzahnung eingearbeitet.

Vorteilhafterweise entsteht durch gegenläufige Verzahnung eine besondere Anordnung der Zähne. Die Zähne erscheinen wie gleichmäßig verteilte Noppen an den Planetspindeln. Während bei der bekannten Igelverzahnung ringförmige, quer zur spindellängsrichtung verlaufende Ausnehmungen entstehen, in denen von der Verzahnung keine Kräfte auf eine durch den Extruder strömende Schmelze ausgeübt wird bzw. nur Kräfte aus der bisherigen Schmelzeströmung und aus nachströmender Schmelze auftreten, ist das bei der Igelverzahnung anders. In Umfangsrichtung liegt hinter jeder Zahnlücke eine anderer Zahn, so daß keine vergleichbaren Ausnehmungen wie bisher entstehen.

Dadurch entfalten die Planetspindeln auf der ganzen gegenläufig verzahnten Länge eine gleichmäßige Wirkung.

Die gegenläufige Verzahnung beeinträchtigt das Zusammenwirken der Planetspindeln mit der Zentralspindel und der innen verzahnten Buchse nicht, weil Planetspindelzähne durch die gegenläufige Verzahnung lediglich Ausnehmen erfahren bzw. die stehen bleibenden Zahnteile unverändert in die Verzahnung der Zentralspindel und der Buchse greifen.

Die übliche Verzahnung hat eine Neigung bis 45 Grad. *Es kommen auch Verzahnung mit einer Steigung zwischen 20 bis 50 Grad in Betracht.*

Vorzugsweise wird eine gegenläufige Verzahnung mit einer anderen Neigung als die übliche Verzahnung eingearbeitet. Die Neigung kann geringer oder größer sein. Der Unterschied zwischen der rechtsgängigen und der linksgängigen Verzahnung beträgt vorzugsweise bis 15 Grad, noch weiter bevorzugt bis 5 Grad.

Vorzugsweise beträgt der Steigungsunterschied mindestens 1 Grad.

Die unterschiedliche Neigung hat vorteilhafte Wirkungen. Insbesondere wird Schmelze dadurch besser gelenkt.

Wahlweise wird auch die gegenläufige Verzahnung mit einer anderen Tiefe gearbeitet. Der Unterschied zwischen der Tiefe linksgängiger und der Tiefe rechtsgängiger Verzahnung wird vorzugsweise in Prozenten von der ursprünglichen Verzahnung angegeben. Bei 0% hat die gegenläufig eingeschnittene Verzahnung die gleiche Tiefe wie die ursprüngliche Verzahnung. Bei - 10% hat die gegenläufig eingeschnittene Verzahnung eine um 10% geringere Tiefe als die ursprünglich eingeschnittene Verzahnung. Bei -90% hat die gegenläufig eingeschnittene Verzahnung eine um 90% geringere Tiefe als die ursprünglich eingeschnittene Verzahnung. Entsprechendes gilt bei -80% usw.

Vorzugsweise beträgt die Tiefe der gegenläufig eingeschnittenen Verzahnung mindestens -10%.

Bei +10% hat die gegenläufig eingeschnittene Verzahnung eine um 10% größere Tiefe als die ursprünglich eingeschnittene Verzahnung. Bei +20% hat die gegenläufig eingeschnittene Verzahnung eine um 20% größere Tiefe als die ursprünglich eingeschnittene Verzahnung. Entsprechendes gilt für +3 0 usw.

Die Vergrößerung der Verzahnungstiefe findet ihre Grenze in der notwendigen Festigkeit der stehenden bleibenden Teile der ursprünglichen Verzahnung. Die notwendige Festigkeit ist auch von der Belastung der Verzahnung abhängig, die sich erst aus dem jeweiligen Anwendungsfall ergibt Die notwendige Festigkeit kann wahlweise mit einem oder wenigen Versuchen bestimmt werden.

Obiges gilt für Verzahnungsmodule 1 bis 25.

Vorzugsweise findet bei der erfindungsgemäßen Verzahnung der Planetenspindeln eine Evolventenverzahnung sowohl für die ursprüngliche Verzahnung als auch für die gegenläufige Verzahnung Anwendung. In Betracht kommt aber auch eine andere Verzahnungsart. Wahlweise kann auch die Evolventenverzahnung mit einer anderen Verzahnungsart in Betracht. Dabei kann die herkömmliche Verzahnung eine Evolventenverzahnung und die gegenläufige andere Verzahnung eine andere Verzahnung sein oder umgekehrt.

Wahlweise können auch erfindungsgemäß verzahnte Planetenspindeln mit herkömmlich verzahnten Planetenspindeln kombiniert werden.

*Der oben beschriebene Feststoffeintrag und Fasereintrag findet an geeigneter Stelle in der Behandlungsstrecke des Behandlungsgutes im Extruder statt, z.B. durch einen Seiteneintrag.*

In der Zeichnung sind verschiedene Ausführungsbeispiele des älteren Vorschlages und der Erfindung dargestellt.

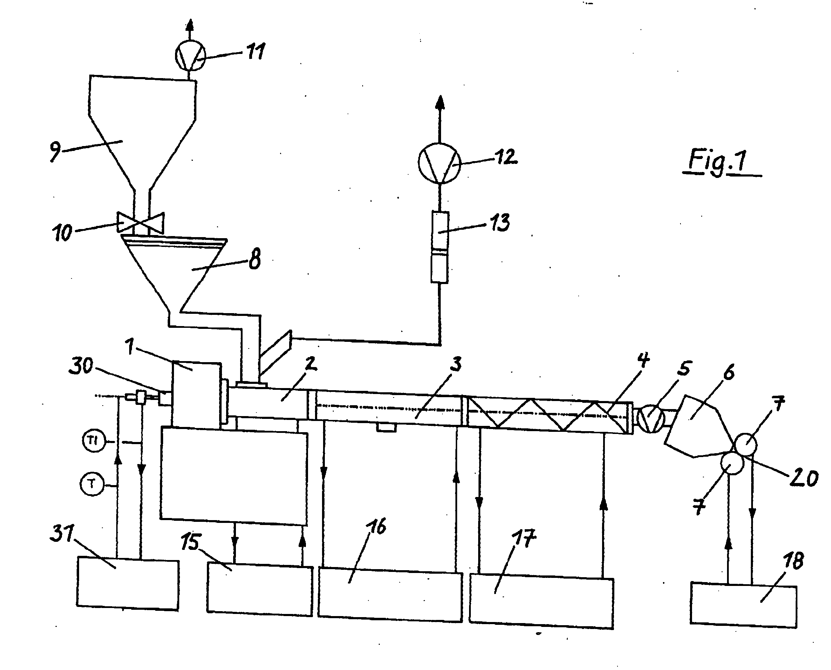

Fig. 1 zeigt einen Extruder mit folgenden Komponenten/Abschnitten: Antrieb 1, Einzug 2, Planetwalzenabschnitt 3, Austragschnecke 4, Schmelzepumpe 5, Breitschlitzdüse 6.

In den Einzug 2 mündet eine Dosierung mit zwei hintereinander geschalteten Schleusen. Zu beiden Schleusen gehören zwei Behälter 8 und 9 und ein zwischengeschalteter Schieber 10. Von dem Behälter 8 führt eine Dosierungsleitung in den Einzug 2.

Der Behälter 9 wird in nicht dargestellter Form mit PET-Granulat gefüllt und geschlossen. Anschließend wird mittels der Pumpe 11 ein Unterdruck an den Behälter 9 angelegt Damit wird die eingeschlossene Luft weitgehend abgesaugt. Zugleich findet eine Erwärmung zur Trocknung des PET-Granulats statt.

Aus dem Behälter 9 wird das erwärmte PET-Granulat bei geöffnetem Schieber 10 in den Behälter 8 aufgegeben. Im Behälter 8 wird das PET-Granulat weiter erwärmt und weitere getrocknet Anschließend wird der Schieber 10 geschlossen und das PET-Granulat weiter vorgewärmt und in den Einzug 2 eindosiert. Dabei besteht in der Leitung von dem Behälter 8 zum Einzug 2 ein Unterdruck, der mittels einer Pumpe 12 erzeugt wird.

Das PET-Granulat gelangt in den Einzug 2 und wird von dort in lockerer Schüttung in Extrusionsrichtung gefördert. Die Extrusionsrichtung weist in der Zeichnung von links nach rechts.

In dem Einzug 2 findet eine weitere Erwärmung statt.

Für die Erwärmung des PET-Granulats ist ein Heiz-Kühlkreis 15 vorgesehen.

Durch die Trocknung und durch den Unterdruck im Bereich der Dosierung und des Einzuges wird die dem PET-Grranulat anhaftende oberflächliche Feuchtigkeit entfernt

Das PET-Granulat gelangt im Ausführungsbeispiel mit einer Temperatur von 130 Grad Celsius in den nächsten Extruderabschnitt, nämlich den Planetwalzenextruderabschnitt 3. In dem Planetwalzenextruderabschnitt 3 wird das PET-Granulat zwischen den umlaufenden Planetwalzenspindeln, der Zentralspindel und dem innen verzahnten Extrudergehäuse vielfach geknetet, so daß sich immer neue Oberflächen bilden, von denen die eingeschlossene Feuchtigkeit abdampft. Dabei wird die Temperatur von 130 Grad Celsius im wesentlichen beigehalten. Das bedingt eine Kühlung, weil beim Kneten die eingebrachte Verformungsenerge in Wärme umgesetzt wird. Kühlung erfolgt mittels eines Heiz-Kühlkreises 16.

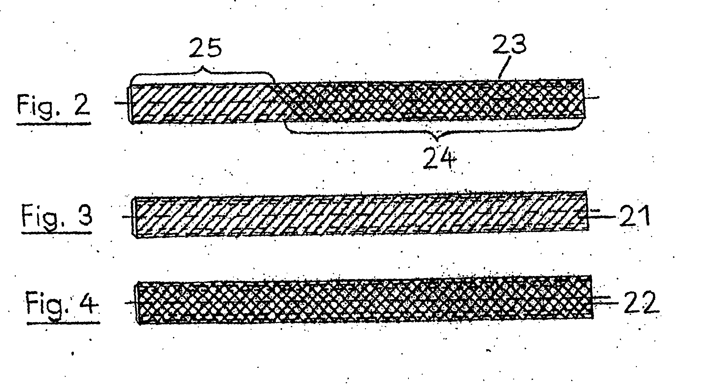

In dem dargestellten Planetwalzenextruderabschnitt finden nach Fig. 3 herkömmliche Planetwalzenspindeln 21 Anwendung. Im Ausführungsbeispiel sind fünf Planetwalzenspindeln vorgesehen, in anderen Ausführungsbeispielen mehr Spindeln oder weniger Spindeln.

Diese Planetwalzenspindeln 21 bilden mehrgängige Schnecken, die sich mit gleichbleibender Neigung über die gesamte Spindellänge erstrecken.

Die Schneckengänge sind in der Zeichnung durch schräg zur Spindellängsachse verlaufende Striche dargestellt.

Die Schneckengänge verlaufen im Ausführungsbeispiel in der Seitenansicht von rechts rechtsgängig, im Uhrzeigersinn. Die Schnecken besitzen außenseitig eine Verzahnung. Die korrespondierende spiegelbildliche Verzahnung findet sich an der Zentralspindel des Planetwalzenextruderabschnittes und dem innen verzahnten umgebenden Gehäuse, so daß die Planetwalzenspindeln 21 sowohl mit der Gehäuseverzahnung als auch mit der Zentralspindel kämmen können.

Fig. 4 zeigt Planetwalzenspindeln 22 eines weiteren Ausführungsbeispiels, welche einerseits die gleichen Schneckengänge wie die Schnecken/Spindeln nach Fig. 3 besitzen. Andererseits besitzen die Spindeln zugleich linksgängig verlaufende Nuten, welche die rechtsgängig verlaufenden Schneckengänge schneiden. Die linksgäng verlaufenden Nuten sind mit Strichen in der Fig. 4 dargestellt, welche die aus Fig. 3 bekannten Schneckengänge rechtwinklig kreuzen. Das ist mit kreuzenden Strichen dargestellt. Durch die kreuzenden Nuten werden die Stege zwischen den Schneckengängen, welche im Querschnitt die Zähne der Verzahnung bilden, unterbrochen. Die zwischen zwei Unterbrechungen verbleibenden Zähne bilden einen stachelartigen/noppenartigen Zahn. Die vielen nebeneinander entstehenden Stachel/Noppen erinnern an das Stachelkleid eines Noppens. Daraus resultiert die Bezeichnung Noppenverzahnung. Die Unterbrechungen werden im weiteren als Zahnlücken bezeichnet

Fig. 2 zeigt weitere Planetenspindeln 23 mit einem Teil 25, welcher der Verzahnung nach Fig. 3 nachgebildet ist, und mit einem Teil 24, welcher der Verzahnung nach Fig. 4 nachgebildet ist.

Die abgedampfte Feuchtigkeit wird durch die Einzugschnecke hindurch abgezogen, weil die Schüttlage bzw. Bewegungslage des PET-Granulats in den Schneckengänge ausreichend locker bzw. die Schneckengänge durch das PET-Granulat auch am Ende der Einzugschnecke nur teilweise ausgefüllt werden.

An der Einzugschnecke vorbei gelangt der Abdampf hauptsächlich in die zur Pumpe 12 führende Leitung. In der Leitung wird der Dampf im Kondensator 13 kondensiert und ausgetragen.

Das PET-Granulat wird im wesentlichen mit gleichbleibender Temperatur aus dem Planetwalzenextruderabschnitt 3 in die Austragsschnecke 4 übergeben. Die Austragsschnecke hat gegenüber herkömmlichen Austragschnecken im Ausführungsbeispiel nicht die Aufgabe des Druckaufbaus. Dafür ist die in Extrusionsrichtung nachgeschaltete Schmelzepumpe 5 vorgesehen.

Die Austragschnecke 4 hat die Aufgabe, das PET-Granulat aufzuschmelzen.

Dazu wird das PET-Granulat auf 250 bis 260 Grad Celsius erhöht. Die Erwärmung erfolgt mittels eines Heiz-Kühlltreises 17 und aufgrund von Verformungsarbeit der Austragschnecke.

Die Austragschnecke ist dabei hinsichtlich ihres Schneckenganges und des Schneckenquerschnittes so gestaltet, daß sich ein Druck aufbaut, der zusammen mit der weiteren Verformungsarbeit bei der erreichten Temperatur eine Plastifizierung des PET-Granulats bewirkt.

Der gesamte Extruder ist mit einer durchlaufenden Stange/Rohr 30 durchsetzt Auf dem Rohr 30 sind verschiedene Aufsätze aufgesteckt und verspannt, so daß im Einzugsbereich 2 eine Einschnecke entsteht, im Bereich 3 eine Zentralspindel ensteht und im Bereich 4 wiederum eine Einschnecke entsteht. Das Rohr 30 ist temperiert. Zur Temperierung dient ein Heiz- und Kühlkreis 31.

Mit der Schmelzepumpe 5 wird der Druck der aus der Austragschnecke 4 austretenden Schmelze so weit erhöht, daß sich die Schmelze gleichmäßig in der Breitschlitzdüse 6 verteilt und aus der Breitschlitzdüse als dünne Schicht 20 austritt. Die dünne Schicht wird sofort von gekühlten Kalanderwalzen 7 aufgenommen und stark abgekühlt und auf ein gewünschtes Dickenmaß gebracht, so daß eine gewünschte PET-Folie entsteht

Zur Kühlung der Kalanderwalzen 7 ist ein Kühlkreis 18 vorgesehen.

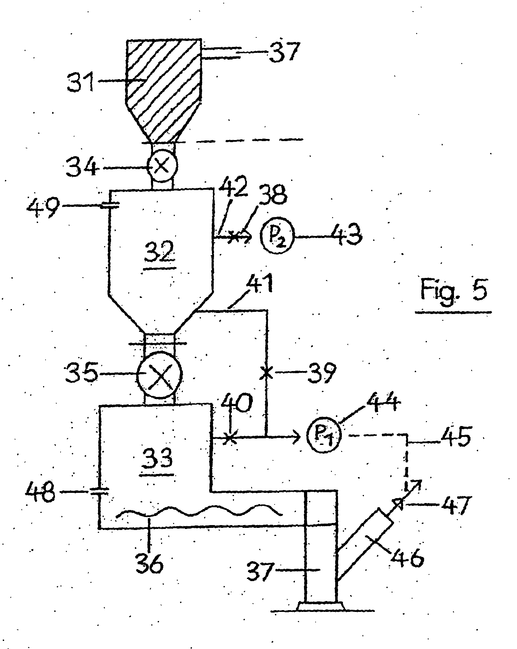

Fig. 5 zeigt die Materialzuführung eines anderen Ausführungsbeispiels.

Dabei ist eine Zuführung 37 für PET-Granulat vorgesehen.

Die Zuführung 37 führt in einen trichterförmigen Aufgabebehälter 31.

Der Aufgabebehälter 31 ist über einem Schleusenbehälter 32 angeordnet.

Der Schleusenbehälter 32 ist über einem weiteren Schleusenbehälter 33 angeordnet.

Von dem Schleusenbehälter 33 führt eine Austragsschnecke 36 zu einem Fall 37.

Aus dem Fallrohr 37 gelangt das PET-Granulat in einen Extruder.

Zwischen den beiden Behältern 31 und 32 ist eine Schleuse/Schieber 34 vorgesehen, zwischen den Behältern 32 und 33 eine Schleuse/Schieber 35.

Alle Behälter 31,32,33 und das Fallrohr 37 werden beheizt.

Alle Behälter 31,32,33 und das Fallrohr 37 werden evakuiert. Dazu sind Saugleitungen 42,41,40,46 und 45 und Pumpen 43 und 44 vorgesehen.

In den Saugleitungen 42, 41, 40, 46 und 45 sind Schieber 38, 39, 40 und 47 vorgesehen. Durch die Vorwärmung und die Evakuierung über die Saugleitungen findet eine Vorentgasung des Material statt.

Der Schleusenbetrieb wird über Schalter gesteuert, und zwar einen Min-Schalter48 und einen Max-Schalter 49. Der Min-Schalter 48 gibt Kontakt zum Nachfüllen des Behälters 33, wenn die Behälterfüllung eine Mindestfüllung für die Materialaufgabe in den Extruder erreicht hat. Danach wird die Schleuse/Schieber 34 geschlossen und die Schleuse/Schieber 35 geöffnet, so daß der Materialinhalt des Behälters 32 in den Behälter 33 ablaufen kann. Das Volumen des Behälters 33 ist größer als das Volumen des Behälters 32 ausgelegt, so daß keine Überfüllung des Behälters 33 entstehen kann.

Nach der Entleerung des Behälters 32 wird die Schleuse/Schieber 35 geschlossen und die Schleuse/Schieber 34 geöffnet so daß PET-Granulat aus dem Aufgabebehälter 31 in den Behälter 32 nachströmen kann. Der Füllvorgang wird durch Schließen der Schleuse/Schieber 34 beendet, wenn ein ausreichender Füllgrad erreicht ist und der Max-Schalter 49 Kontakt gibt.

Die Behälter 32 und 33 werden durch die Saugleitungen über verschiedene Pumpen 43 und 44 evakuiert, wenn die Schleuse/Schieber 34 geschlossen ist. Bei Öffnung der Schleuse/Schieber 34 wird durch Betätigung der Schieber 38 und 39 der Evakuierungsvorgang unterbrochen. Die Schieber 38,39,40 und 47 finden zur Unterbrechung des Evakuierungsvorganges auch Anwendung, wenn über nicht dargestellte Klappen eine Reinigung der Behälter erfolgen soll.

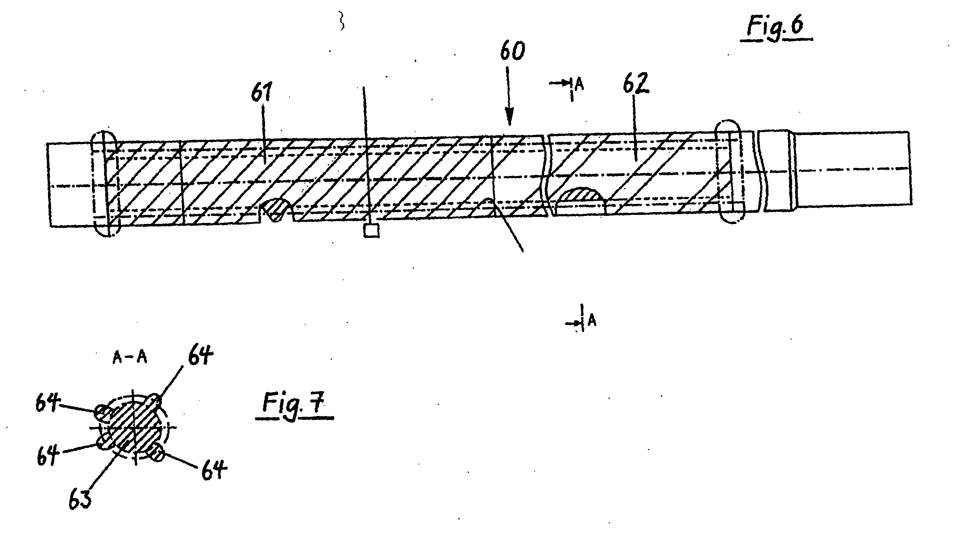

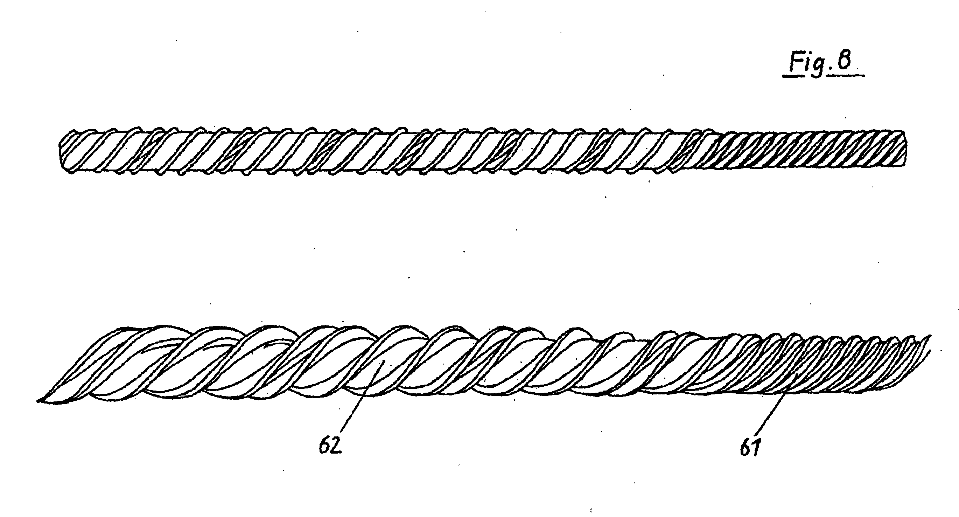

Fig. 6 und 8 zeigen für die Verwendung eines Planetwalzenextruders in der Trocknungsstation einer PET-Aufbereitungsanlage eine erfindungsgemäße Planetwalzenspindel 60.

Die Planetwalzenspindel 60 besteht aus zwei Teilen 61 und 62. Der Teil 61 entspricht einer herkömmlichen Planetwalzenspindel mit vollem Zahnbesatz. Im Ausführungsbeispiel handelt es sich um eine Planetwalzenspindel mit einem Teilkreisdurchmesser von 34mm, mit einem Außendurchmesser von 42mm und einem Durchmesser von 26mm am Zahnfuß des Zahnbesatzes. Im Ausführungsbeispiel hat der Teil 61 eine Länge von 200mm. Die Gesamtlänge der Planetwalzenspindel 60 beträgt 1000mm.

Dadurch ergibt sich für den Teil 62 eine Länge von 800 mm. Der Teil 62 definiert den Bereich erfindungsgemäßer Ausbildung der Planetwalzenspindel, Teil 61 definiert den Restbereich. Im Teil 61 hat die Spindel 7 Zähne 64, die ähnlich wie Gewindegänge, aber mit sehr großer Steigung an der Planetwalzenspindelaußenseite verlaufen. Dies ist in der Fig. 8 dargestellt.

Im Teil 62 sind 3 Zähne 64 abgefräst worden. Das ist vor einer Oberflächenhärtung der Zähne 64 erfolgt. Die Verteilung der verbliebenen Zähne ist in Fig. 7 dargestellt. Dabei liegen noch zwei Zähne 64 nebeneinander. Zu den übrigen Zähnen ergibt sich eine Zahnlücke.

Im Ausführungsbeispiel sind von diesen Planetwalzenspindeln sechs Stück zusammen mit weiteren sechs Planetwalzenspindeln als Besatz in dem Planetwalzenextruder vorgesehen, der für die PET-Trocknung vorgesehen ist. Die weiteren Planetwalzenspindeln besitzen eine Länge von 850 mm bei gleicher Länge des Restbereiches.

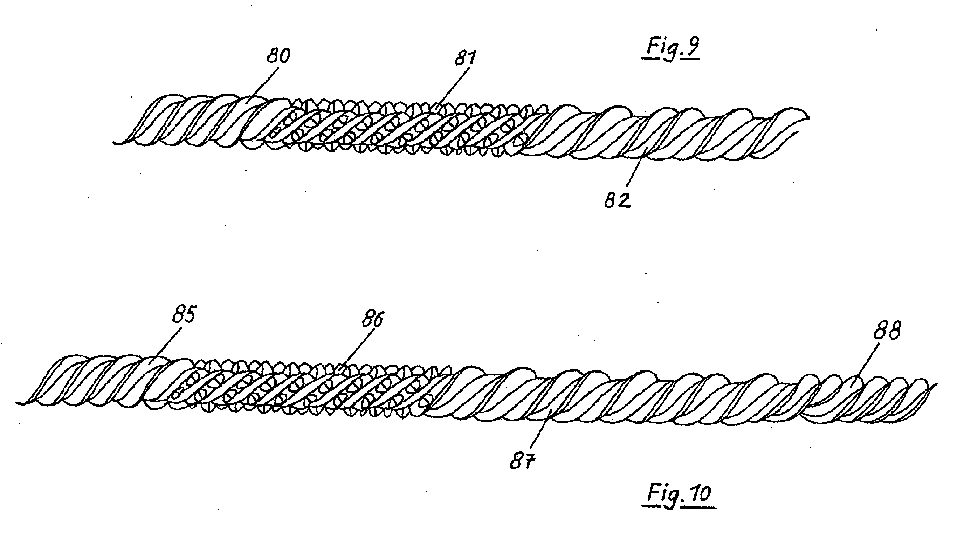

Fig. 9 zeigt eine Planetwalzenspindel mit einer Normalverzabuung 80 an einem Ende, dann einen Bereich 81 mit einer Igelverzahnung und einen Bereich 82 mit einer erfindungsgemäßen reduzierten Verzahnung.

Fig. 10 zeigt eine Planetwalzenspindel mit einer Normalverzahnung 85 an einem Ende, dann einen Bereich 86 mit einer Igelverzahnung, dann einem Bereich 87 mit einer reduzierten Verzahnung und wieder eine Normalverzahnung 88 am anderen Spindelende.

## Patentansprüche

1. Verfahren zum Betrieb von Planetwalzenextrudern mit einer außen verzahnten Zentralspindel, auf der Zentralspindel umlaufenden, verzahnten Planetwalzenspindel und einem innen verzahnten, umgebenden Gehäuse, wobei die Planetwalzenspindeln zugleich mit der Zentralspindelverzahnung mit der Gehäuseverzahnung kämmen, wobei die Verzahnung eine Schrägverzahnung ist, so daß die einzelnen Zähne entsprechend der Steigung der Zähne zur Extruderlängsachse wie Schraubengänge an den verzahnten Flächen verlaufen,
insbesondere mit einer Evolventenzerzahnung und
insbesondere zur Entgasung und/oder Trocknung von thermoplastischen Kunststoffen **gekennzeichnet durch**
a) die Verwendung von Planetwalzenspindeln und/oder Zentralspindeln und/oder Gehäuseverzahnungen, an denen mindestens ein Zahn, aber nicht alle Zähne nachträglich ganz oder teilweise herausgearbeitet worden ist wobei eine Zahnreduzierung bis maximal auf einen Zahn erfolgt und/oder
b) eine Herstellung der Verzahnung nach einer festgelegten Zahnkontur an Planetwalzenspindeln und/oder Zentralspindeln und/oder Gehäuseverzahnungen, wobei die Zahnkontur so festgelegt ist, daß sie gleich einer Verzahnung mit nachträglich ganz oder teilweise herausgearbeiteten Zähnen ist.

2. Verfahren nach Anspruch 1, **gekennzeichnet durch**
a)die Verwendung von Planetwalzenspindeln und/oder Zentralspindeln und/oder Gehäuseverzahnungen, an denen mindestens ein Zahn, aber nicht alle Zähne nachträglich ganz oder teilweise herausgearbeitet worden ist wobei eine Zahnreduzierung bis maximal auf zwei Zähne erfolgt und/oder
b)eine Herstellung der Verzahnung nach einer festgelegten Zahnkontur an Planetwalzenspindeln und/oder Zentralspindeln und/oder Gehäuseverzahnungen, wobei die Zahnkontur so festgelegt ist, daß sie gleich einer Verzahnung mit nachträglich ganz oder teilweise herausgearbeiteten Zähnen ist.

3. Verfahren nach Anspruch 1 oder 2, **gekennzeichnet durch** Verwendung von Planetwalzenspindeln und/oder Zentralspindeln und/oder Gehäuseverzahnungen, denen jeder 4 bis 2 Zahn herausgearbeitet worden ist.

4. Verfahren nach einem der Ansprüche 1 bis 3, **gekennzeichnet durch** die Verwendung von Planetwalzenspindeln und/oder Zentralspindeln und/oder Gehäuseverzahnungen, die entweder
in dem Bereich des reduzierten Zahnbesatzes eine gerade Zahl von Zähnen besitzen, während die Verzahnung an dem korrespondierenden Planetwalzenteil eine ungerade Zahl von Zähnen besitzen
oder
in dem Bereich des reduzierten Zahnbesatzes eine ungerade Zahl von Zähnen besitzen, während die Verzahnung an dem korrespondierenden Planetwalzenteil eine gerade Zahl von Zähnen besitzen
und/oder mit unbearbeiteten Planetwalzenspindeln kombiniert sind und/oder mit anders bearbeiteten Planetwahenspindeln kombiniert sind

5. Verfahren nach Anspruch 4, **dadurch gekennzeichnet, daß** die unterschiedliche Bearbeitung
**dadurch** erfolgt, daß in unregelmäßigen Abständen die Zähne entfernt werden

6. Verfahren nach einem der Ansprüche 1 bis 5, **gekennzeichnet durch** die Verwendung von Planetwalzenspindeln und/oder Zentralspindeln und/oder Gehäuseverzahnungen, die in einem Restbereich einen vollen Zahnbesatz und /oder eine
Noppenverzahnung oder eine andere Verzahnung aufweisen.

7. Verfahren nach Anspruch 6, **gekennzeichnet durch** die Verwendung einteiliger oder mehrteiliger Planetwalzenspindeln und/oder Zentralspindeln und/oder Gehäuseverzahnungen.

8. Verfahren nach Anspruch 6, **gekennzeichnet durch** die Verwendung von einteiligen Planetwalzenspindeln mit einem Teil mit reduziertem Zahnbesatz und einem Teil mit vollem Zahnbesatz, wobei die **durch** Reduzierung des Zahnbesatzes entstandenen Zahnlücken am Übergang zwischen beiden Teilen auslaufen.

9. Verfahren nach Anspruch 7, **gekennzeichnet durch** die Verwendung von mehrteiligen Planetwalzenspindeln und/oder Zentralspindeln und/oder Gehäuseverzahnungen mit einem Teil mit reduziertem Zahnbesatz und einem Teil mit vollem
Zahnbesatz, wobei die beiden Teile separat hergestellt und anschließend miteinander verbunden werden.

10. Verfahren nach Anspruch 8, **gekennzeichnet durch** Verwendung von Planetwalzenspindeln
und/oder Zentralspindeln und/oder Gehäuseverzahnungen
mit Teilen, die mittig mit einer Bohrung versehen sind und zur Verbindung mit einem in der
Bohrung angeordneten Anker gegeneinander verspannt werden.

11. Verfahren nach einem der Ansprüche 7 bis 10, **dadurch gekennzeichnet, daß** der Teil mit reduziertem Zahnbesatz bei einem Planetwalzenspindeldurchmesser
a)kleiner 160 mm in Spindellängsrichtung eine Länge von mindesten 200mm, vorzugsweise eine Länge von mindestens 300 mm und noch weiter bevorzugt eine Länge von mindestens 400 mm und höchst bevorzugt eine Länge bis 800 mm aufweist und
b)von 160mm und mehr in Spindellängsrichtung eine Länge von mindestens 400mm, vorzugsweise mindestens 800 mm und weiter bevorzugt eine Länge von mindestens 1200mm und höchst bevorzugt eine Länge bis 2500 mm aufweist.

12. Verfahren nach einem der Ansprüche 1 bis 11, **gekennzeichnet durch** eine Teilfertigung der Planetwalzenspindeln und Vorratshaltung der teilgefertigten Planetwalzenspindeln, so daß die Fertigung je nach Bedarf ohne Reduzierung des vollen Zahnbesatzes oder unter Reduzierung des vollen Zahnbesatzes fortgesetzt werden kann.

13. Verfahren nach einem der Ansprüche 1 bis 12, **gekennzeichnet durch** Verwendung der Planetwalzenspindeln mit reduziertem Zahnbesatz zur Trocknung und/oder Entgasung des Behandlungsgutes.

14. Verfahren nach Anspruch 13, **gekennzeichnet durch** eine Trocknung von Kunststoffpartikeln, wobei die Partikel zumindest in Inneren eine Temperatur unterhalb des Schmelzpunktes aufweisen.

15. Verfahren nach einem der Ansprüche 1 bis 14, **dadurch gekennzeichnet, daß** durch Kombination der
Planetwalzenspindeln mit reduziertem Zahnbesatz mit Planetwalzenspindeln mit Normalverzahnung oder anderer Verzahnung der Behandlungsvorgang und/oder die Behandlungstemperatur und oder die Förderwirkung verändert wird.

16. Verfahren nach einem der Ansprüche 1 bis 15, **dadurch gekennzeichnet, daß** nach der Reduzierung des Zahnbesatzes an den Planetenspindeln die reduzierte Förderleistung durch Erhöhung der Zahl der Planetenspindeln mindestens teilweise ausgeglichen wird.

17. Verfahren nach einem der Ansprüche 1 bis 16, **gekennzeichnet durch** Herstellung eines Wechsels der Verzahnung über der Länge der Planetwalzenspindel und/oder Zentralspindeln und/oder Gehäuseverzahnungen.

18. Verfahren nach einem der Ansprüche 1 bis 17, **dadurch gekennzeichnet, daß** die Zahnlücke an einer Planetwalzenspindel und/oder Zentralspindel und/oder Gehäuseverzahnung zwischen zwei Zähnen im Bereich des reduzierten Zahnbesatzes größer als ein benachbarter Zahn ist.

19. Verfahren nach einem der Ansprüche 1 bis 18, **dadurch gekennzeichnet, daß** die Planetwalzenspindeln neben einem Bereich mit reduziertem Zahnbesatz auch einen Bereich anderer Verzahnung aufweisen.

20. Verfahren nach Anspruch 19, **dadurch gekennzeichnet, daß** die Planetspindeln mindestensteilweise
mit einer Igelverzahnung und/oder mit einer Noppenverzahnung und/oder mit einer Normalverzahnung versehen sind.

21. Verfahren nach Anspruch 20, **dadurch gekennzeichnet, daß** sich an mindestens einem Ende der Planetwalzenspindeln Normalverzahnung befindet.

22. Verfahren nach Anspruch 21, **dadurch gekennzeichnet, daß** die Normalverzahnung zur Führung der Planetwabenspindeln vorgesehen ist und in axialer Richtung mindestens eine Länge von 1 D, vorzugsweise 1,5 D und noch weiter bevorzugt mindestens 2 D hat, wobei D das Maß des Teilkreisdurchmessers der Normalverzahnung ist.

23. Verfahren nach einem der Ansprüche 19 bis 22, **dadurch gekennzeichnet, daß** der Transport-Bereich in Strömungsrichtung des Materials vor oder hinter dem Igel- Bereich an den Planetwalzenspindeln vorgesehen ist.

24. Verfahren nach Anspruch 23, **dadurch gekennzeichnet, daß** die Länge des Transport-Bereichs der Planetwalzenspindeln 30 bis 70% der Gesamtlänge der Planetwalzenspindeln ausmacht.

25. *Verfahren nach einem oder mehreren der Ansprüche 1 bis 24, **gekennzeichnet durch** die Kombination von ganz oder teilweise zahnreduzierten Spindeln mit anderen Planetwalzenspindeln in einem Planetwalzenextruderabschnitt und*/*oder die Kombination mit einem in Förderrichtung vorgeordneten oder nachgeordneten Plantwalzenextruderabschnitt mit anderen planetwalzenpindeln.*
